# EUROPÄISCHE PATENTSCHRIFT

(11) **EP 2 690 310 B1**
(45) Veröffentlichungstag und Bekanntmachung des Hinweises auf die Patenterteilung: **31.08.2016**
(21) Anmeldenummer: 12005428.3
(22) Anmeldetag: 26.07.2012
(51) Int. Cl.: F16F 15/126, F16D 41/06, F16D 47/02, F16H 55/36

(54) **Vorrichtung zur Schwingungsentkopplung**
Device for decoupling element
Dispositif de découplage par oscillations

(43) Veröffentlichungstag der Anmeldung: 29.01.2014
(73) Patentinhaber: Vibracoustic GmbH, 64293 Darmstadt (DE)
(72) Erfinder: Gräber, Stefan, 79395 Grissheim (DE); Wohlschlegel, Peter, 79400 Kandern (DE); Fassbinder, Peter, 79312 Emmendingen (DE); Reymann, Francois, 68740 Munchhouse (FR)
(74) Vertreter: Flügel Preissner Schober Seidel

(56) Entgegenhaltungen:
- EP-A1- 1 619 410
- DE-A1- 19 535 889
- DE-A1-102009 014 203
- US-A- 5 722 909
- US-A1- 2002 129 675
- US-A1- 2007 066 426

## Beschreibung

### Technisches Gebiet

Die Erfindung betrifft eine Vorrichtung zur Schwingungsentkopplung gemäß dem Oberbegriff des Patentanspruchs 1.

### Stand der Technik

In Kraftfahrzeugen mit Verbrennungsmotoren werden Kurbelwellen genutzt, um über einen Riementrieb Nebenaggregate anzutreiben. Ein Nebenaggregat kann beispielsweise ein Klimakompressor sein.

Die Kurbelwellen können jedoch Drehzahlschwankungen zeigen. Um diese Drehzahlschwankungen auszugleichen, werden entkoppelte Riemenscheiben eingesetzt.

Entkoppelte Riemenscheiben haben die Aufgabe, Drehzahlschwankungen einer Kurbelwelle von einem Riementrieb zum Antrieb von Nebenaggregaten fernzuhalten. Hierzu wird üblicherweise eine Kupplung zwischen der Kurbelwelle und der Riemenscheibe eingefügt.

Die Torsionssteifigkeit der Kupplung wird so gewählt, dass die erste angeregte Torsionseigenfrequenz des Nebenaggregate-Riementriebsystems geeignet niedriger liegt als die Leerlaufdrehzahl des Verbrennungsmotors.

Die Entkopplungswirkung der Kupplung im Drehzahlbereich des Verbrennungsmotors ist umso besser, je geringer die Dämpfung der Kupplung eingestellt werden kann.

Bei Vorrichtungen des Stands der Technik ist nachteilig, dass bei Jedem Start-/stop-Vorgang des Verbrennungsmotors die erwähnte erste Systemresonanz durchfahren werden muss, wobei die funktionsbedingt weiche, dämpfungsarme Kupplung sehr große Resonanzausschläge ausführt.

Diese Resonanzausschläge sind derart, dass die angekoppelten Massen des Riementriebs häufig nicht folgen können. Es kommt zu einem Riemenschlupf der mit nicht akzeptablen Geräuschen und Riemenverschleiß verbunden ist.

Durch die Reihenschaltung eines Freilaufelements mit einer elastomeren Kupplung wie sie aus der EP 1 619 410 A1 bekannt ist, werden die zuvor genannten Probleme wesentlich positiv kompensiert.

Gerade bei Start-Stop-Vorgängen treten besonders hohe Belastungen eines Freitaufelements auf, wodurch dieses harte Gegenlaufflächen benötigt.

Die notwendigen harten Gegenlaufflächen können durch herkömmliche Härteverfahren oder Verbundtechniken, wie Schweißen, Nieten, Umformen oder ähnliches, erzeugt werden.

Vor diesem Hintergrund ist durch die DE 10 2011 106 349.1 bereits eine Vorrichtung vorgeschlagen worden, bei weicher einem Freilaufelement gehärtete Gegenlaufflächen zugeordnet sind, wobei eine erste Gegenlauffläche der Riemenscheibe zugewandt ist und wobei eine zweite Gegenlauffläche einem elastomeren Federkörper zugewandt ist.

Ein einwandfreier Betrieb der Vorrichtung wird begünstigt, wenn das Freilaufelement möglichst wenig Verschmutzungen erfährt.

### Darstellung der Erfindung

Der Erfindung liegt vor diesem Hintergrund die Aufgabe zugrunde, eine Vorrichtung der eingangs genannten Art derart auszugestalten und weiterzubilden, dass eine optimale Schwingungsentkopplung bei einer hohen Lebensdauer und kostengünstigen Fertigung der Vorrichtung gewährleistet ist

Erfindungsgemäß wird die voranstehende Aufgabe mit den Merkmalen des Patentanspruchs 1 gelöst.

Erfindungsgemäß ist überraschend erkannt worden, dass die erforderlichen Gegenlaufflächen konstruktiv durch Einlegeteile aus hartem Material, insbesondere durch Federbänder, realisiert werden können. Die Einlegeteile können optional durch eine Verbundtechnik, wie Schweißen, Kleben oder ähnliche, einen Formschluß oder nur über einen Kraftschluss mit Bauteilen des Freilaufelements verbunden werden. Einer erhöhten Startanzahl moderner Kraftfahrzeuge kann so wirkungsvoll begegnet werden. Es wird erfindungsgemäß eine Verbesserung des Startverhaltens und stationären Betriebes realisiert. Überdies kann die erfindungsgemäße Vorrichtung kostengünstiger gefertigt werden als die Vorrichtungen des Stands der Technik. Die Einlegeteile können nämlich als separate Bauteile unabhängig vom Freilaufelement gefertigt werden. Hierdurch wird die Fertigung der gesamten Vorrichtung stark vereinfacht. Erfindungsgemäß wird durch ein Einlegeteil ein Träger für mindestens einen oder mehrere Radialweflendichtringe bereit gestellt. Durch den Radialwellendichtring wird das Freilaufelement abgedichtet und vor Verschmutzungen geschützt. Hierdurch wird die Lebensdauer der gesamten Vorrichtung erhöht.

Folglich ist die genannte Aufgabe löst.

Der Radialwellendichtring könnte auf ein Einlegeteil vulkanisiert sein. Hierdurch ist eine verliersichere Anbindung des Radialwellendichtrings an das Einlegeteil sicher gestellt. Der Radialwellendichtring kann so problemlos montiert werden.

Die Gegenlaufflächen könnten gehärtet sein. Durch eine Härtung wird die Lebensdauer der Vorrichtung erhöht. Die Einlegeteile können mittels verschiedener Verfahren gehärtet werden.

Mindestens eine der Gegenlaufflächen könnte eine Rockwellhärte von 45 bis 80 HRC aufweisen. Hierdurch ist vorteilhaft sicher gestellt, dass die Gegenlaufflächen einen möglichst geringen Verschleiß erfahren. Bevorzugt können auch beide Gegenlaufflächen die genannte Rockwellhärte zeigen.

Zwischen dem Freilaufelement und dem elastomeren Federkörper ist ein Innenträger angeordnet, an dem die zweite Gegenlauffläche anliegt, Der Innenträger kann an den elastomeren Federkörper anvulkanisiert sein und so eine radial nach außen gewandte Lauffläche ausbilden. Vorteilhaft ist der Innenträger als metallische Buchse ausgestaltet.

Die erste Gegenlauffläche könnte an einem sich in axialer Richtung erstreckenden Fortsatz der Riemenscheibe anliegen. Der Fortsatz bildet eine radial nach innen gewandte Lauffläche für das Freilaufelement aus.

Das Freilaufelement und der elastomere Federkörper könnten in radialer oder axialer Richtung benachbart angeordnet sein. Diese Bauweisen ermöglichen in Abhängigkeit von den baulichen Voraussetzungen eine besonders günstige Kraftübertragung zwischen den beiden Bauteilen.

Zwischen der Riemenscheibe und der Antriebswelle könnte ein Gleitlager oder ein Wälzlager angeordnet sein, wobei das Gleitlager oder Wälzlager zwischen einer der gezahnten Fläche der Riemenscheibe abgewandten Anlagefläche und einer äußeren Umfangsfläche der Antriebswelle angeordnet ist. Die Vorkehrung eines Gleit- oder Wälzlagers realisiert eine reibungsarme Bewegung der Riemenscheibe relativ zur Kurbelwelle. Hierdurch werden Verschleißerscheinungen stark reduziert. Des weiteren können geeignete Lager bei Vorkehrung von Schmiermitteln zur Steigerung der Entkopplungsgüte beitragen.

An der Antriebswelle könnte ein Schwungring angeordnet sein, wobei zwischen dem Schwungring und der Antriebswelle ein Elastomer angeordnet ist. Der Schwungring wirkt gemeinsam mit dem Elastomer als Torsionsschwingungsdämpfer.

Der elastomere Federkörper könnte aus einem weicheren Werkstoff gefertigt sein als das Elastomer, welches den Schwungring an die Antriebswelle anbindet. Der elastomere Federkörper kompensiert eine Drehungleichförmigkeit der Antriebswelle. Bei Drehzahlen bis etwa 2500 Umdrehungen/ Minute erfährt die Antriebswelle durch einen Verbrennungsmotor Beschleunigungen und Verzögerungen ihrer Drehung. Der elastomere Federkörper kann die Riemenscheibe von dieser Drehungleichförmigkeit der Antriebswelle weitgehend entkoppeln. Ab einer Drehzahl von etwa 2500 Umdrehungen/ Minute erfährt die Antriebswelle intrinsische Verdrehungen, die zu Torsionsschwingungen führen. Diese Torsionsschwingungen können durch den Schwungring nebst dem Elastomer, welches den Schwungring an die Antriebswelle anbindet, bedämpft werden.

Der Schwungring könnte axial benachbart zur Riemenscheibe oder radial innerhalb der Riemenscheibe angeordnet sein. Durch diese Bauweisen ist die gezahnte Fläche der Riemenscheibe leicht zugänglich.

Das Freilaufelement könnte als Klemmkörperfreilauf ausgebildet sein. Hierdurch ist eine hohe Rutschsicherheit gewährleistet.

Das Freilaufelement könnte als Klemmrollenfreilauf ausgebildet sein. Ein Klemmrollenfreilauf ist geräuscharm, verschleißfest und in Automobilantrieben erprobt.

Die hier beschriebene Vorrichtung eignet sich besonders zur Verwendung in Kraftfahrzeugen, da moderne Kraftfahrzeuge zur Kraftstoffeinsparung ihren Verbrennungsmotor sehr häufig abschalten und starten. Bei modernen Kraftfahrzeugen wird der Verbrennungsmotor beispielsweise automatisch abgeschaltet, wenn das Kraftfahrzeug an einer Ampel zum Stehen kommt. Sobald die Ampel eine Weiterfahrt erlaubt, wird der Verbrennungsmotor erneut gestartet. Diese häufigen Start-Stop-Vorgänge eines Verbrennungsmotors erfordern eine verschleißfeste Vorrichtung zur Anbindung von Nebenaggregaten an die Kurbelwelle.

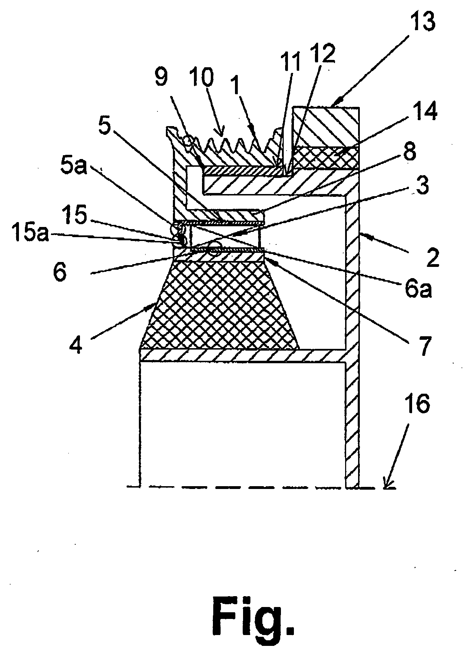

### Kurzbeschreibung der Zeichnung

In der Zeichnung zeigt die einzige
- Fig.: in einer Schnittzeichnung eine teilweise dargestellte Vorrichtung, bei der am Freilaufelement durch Einlegeteile Gegenlaufflächen ausgebildet sind, wobei das Freilaufelement zwischen einer Riemenscheibe und einem elastomeren Federkörper angeordnet ist und wobei an einem radial äußeren Einlegeteil ein Radialwelfendichtring anvulkanisiert ist.

### Ausführung der Erfindung

Die einzige Fig. zeigt eine Vorrichtung zur Schwingungsentkopplung, umfassend eine Riemenscheibe 1 zur Aufnahme eines Riemens, eine Antriebswelle 2, welche die Riemenscheibe 1 rotiert, und eine Kupplungseinrichtung, welche die Riemenscheibe 1 mit der Antriebswelle 2 verbindet, wobei die Kupplungseinrichtung ein Freilaufelement 3 und einen elastomeren Federkörper 4 aufweist, die in Reihe geschaltet sind.

Dem Freilaufelement 3 sind Gegenlaufflächen 5, 6 zugeordnet, wobei eine erste Gegenlauffläche 5 der Riemenscheibe 1 zugewandt ist und wobei eine zweite Gegenlauffläche 6 dem elastomeren Federkörper 4 zugewandt ist

Mindestens eine Gegenlauffläche 5 ist an einem Einlegeteil 5a ausgebildet, wobei mindestens ein Einlegeteil 5a einen Radialwellendichtring 15 trägt oder Bestandteil eines Radialwellendichtrings 15 ist.

Der Radialwellendichtring 15 ist auf das radial äußere, erste Einlegeteil 5a vulkanisiert. Auch das radial innere, zweite Einlegeteil 6a könnte einen Radialwellendichtring tragen oder Bestandteil desselben sein.

Die Gegenlaufflächen 5, 6 sind gehärtet. Die gehärteten Gegenlaufflächen 5, 6 sind beide an Einlegeteilen 5a, 6a ausgebildet.

Die Einlegeteile 5a, 6a sind als separate Bauteile gefertigt und mit Bauteilen des Freilaufelements 3 verbunden. Die Einlegeteile 5a, 6a können als Federbänder ausgebildet sein.

Die Einlegeteile 5a, 6a können optional durch Verbundtechniken, wie Schweißen, Kleben oder ähnliche, einen Formschluß oder nur Ober einen Kraftschluss mit Bauteilen des Freilaufelements 3 verbunden werden.

Die Gegenlaufflächen 5, 6 weisen eine Rockwellhärte von 45 bis 80 HRC auf.

Zwischen dem Freilaufelement 3 und dem elastomeren Federkörper 4 ist ein Innenträger 7 angeordnet, an dem die zweite Gegenlauffläche 6 anliegt. Der Innenträger 7 umgibt die radial äußere Umfangsfläche des elastomeren Federkörpers 4.

Eine umfänglich umlaufende Dichtlippe 15a des Radialwellendichtrings 15 steht im Betrieb in gleitendem Kontakt mit einer radial äußeren Umfangsfläche des Innenträgers 7.

Die erste Gegenlauffläche 5 liegt an einem sich in axialer Richtung erstreckenden Fortsatz 8 der Riemenscheibe 1 an. Das Freilaufelement 3 und der elastomere Federkörper 4 sind in radialer Richtung benachbart angeordnet.

Zwischen der Riemenscheibe 1 und der Antriebswelle 2 ist ein Gleitlager 9 angeordnet, wobei das Gleitlager 9 zwischen einer der gezahnten Fläche 10 der Riemenscheibe 1 abgewandten Anlagefläche 11 und einer äußeren Umfangsfläche 12 der Antriebswelle 2 angeordnet Ist

An der Antriebswelle 2 ist ein Schwungring 13 angeordnet, wobei zwischen dem Schwungring 13 und der Antriebswelle 2 ein Elastomer 14 angeordnet ist. Das Elastomer 14 ist als eine umlaufende Elastomerspur ausgebildet. Der Schwungring 13 und die Antriebswelle 2 rotieren gemeinsam um die Achse 16 und sind konzentrisch angeordnet. Das Elastomer 14 ist an die Antriebswelle 2 und den Schwungring 13 anvulkanisiert.

Der elastomere Federkörper 4 ist aus einem weicheren Werkstoff gefertigt als das Elastomer 14, welches den Schwungring 13 an die Antriebswelle 2 anbindet.

Der Schwungring 13 ist axial benachbart zur Riemenscheibe 1 angeordnet. Das Freilaufelement 3 ist als Klemmkörperfreilauf oder als Klemmrollenfreilauf ausgebildet. Die Antriebswelle 2 ist als Kurbelwelle eines Kraftfahrzeugs ausgestaltet. Die in der Fig. hälftig dargestellte Vorrichtung findet Verwendung in einem Kraftfahrzeug.

## Patentansprüche

1. Vorrichtung zur Schwingungsentkopplung, umfassend eine Riemenscheibe (1) zur Aufnahme eines Riemens, eine Antriebswelle (2), welche die Riemenscheibe (1) rotiert, und eine Kupplungseinrichtung, welche die Riemenscheibe (1) mit der Antriebswelle (2) verbindet, wobei die Kupplungseinrichtung ein Freilaufelement (3) und einen elastomeren Federkörper (4) aufweist, die in Reihe geschaltet sind, wobei dem Freilaufelement (3) Gegenlaufflächen (5, 6) zugeordnet sind, wobei eine erste Gegenlauffläche (5) der Riemenscheibe (1) zugewandt ist und wobei eine zweite Gegenlauffläche (6) dem elastomeren Federkörper (4) zugewandt ist, **dadurch gekennzeichnet, dass** mindestens eine Gegenlauffläche (5, 6) an einem Einlegeteil (5a, 6a) ausgebildet ist, wobei mindestens ein Einlegeteil (5a, 6a) einen Radialwellendichtring (15) trägt oder Bestandteil eines Radialwellendichtrings (15) ist.

2. Vorrichtung nach Anspruch 1, **dadurch gekennzeichnet, dass** der Radialwellendichtring (15) auf das Einlegeteil (5a, 6a) vulkanisiert ist.

3. Vorrichtung nach Anspruch 1 oder 2, **dadurch gekennzeichnet, dass** die Gegenlaufflächen (5, 6) gehärtet sind.

4. Vorrichtung nach einem der Ansprüche 1 bis 3, **dadurch gekennzeichnet, dass** mindestens eine der Gegenlaufflächen (5, 6) eine Rockwellhärte von 45 bis 80 HRC aufweist.

5. Vorrichtung nach einem der Ansprüche 1 bis 4, **dadurch gekennzeichnet, dass** zwischen dem Freilaufelement (3) und dem elastomeren Federkörper (4) ein Innenträger (7) angeordnet Ist, an dem die zweite Gegenlauffläche (6) anliegt.

6. Vorrichtung nach einem der Ansprüche 1 bis 5, **dadurch gekennzeichnet, dass** die erste Gegenlauffläche (5) an einem sich in axialer Richtung erstreckenden Fortsatz (8) der Riemenscheibe (1) anliegt.

7. Vorrichtung nach einem der Ansprüche 1 bis 6, **dadurch gekennzeichnet, dass** zwischen der Riemenscheibe (1) und der Antriebswelle (2) ein Gleitlager (9) oder ein Wälzlager angeordnet ist, wobei das Gleitlager (9) oder Wälzlager zwischen einer der gezahnten Fläche (10) der Riemenscheibe (1) abgewandten Anlagefläche (11) und einer äußeren Umfangsfläche (12) der Antriebswelle (2) angeordnet ist.

8. Vorrichtung nach einem der Ansprüche 1 bis 7, **dadurch gekennzeichnet, dass** an der Antriebswelle (2) ein Schwungring (13) angeordnet ist, wobei zwischen dem Schwungring (13) und der Antriebswelle (2) ein Elastomer (14) angeordnet ist.

9. Vorrichtung nach Anspruch 8, **dadurch gekennzeichnet, dass** der elastomere Federkörper (4) aus einem weicheren Werkstoff gefertigt ist als das Elastomer (14), welches den Schwungring (13) an die Antriebswelle (2) anbindet.

10. Vorrichtung nach Anspruch 8 oder 9, **dadurch gekennzeichnet, dass** der Schwungring (13) axial benachbart zur Riemenscheibe (1) oder radial innerhalb der Riemenscheibe (1) angeordnet ist.

11. Vorrichtung nach einem der Ansprüche 1 bis 10, **dadurch gekennzeichnet, dass** das Freilaufelement (3) als Klemmkörperfreilauf ausgebildet ist.

12. Vorrichtung nach einem der Ansprüche 1 bis 10, **dadurch gekennzeichnet, dass** das Freilaufelement (3) als Klemmrollenfreilauf ausgebildet ist.

## Claims

1. A device for vibration decoupling, comprising a pulley (1) for accommodating a belt, a drive shaft (2) rotating the pulley (1), and a coupling device that connects the pulley (1) with the drive shaft (2), wherein the coupling device has a freewheel member (3) and an elastomeric spring body (4) connected in series, wherein counterfaces (5, 6) are associated with the freewheel member (3), a first counterface (5) facing towards the pulley (1) and a second counterface (6) facing towards the elastomeric spring body (4), **characterised in that**
at least one counterface (5, 6) is formed on an insert (5a, 6a), wherein at least one insert (5a, 6a) carries a radial shaft sealing ring (15) or is a component of a radial shaft sealing ring (15).

2. The device according to claim 1, **characterised in that** the radial shaft sealing ring (15) is vulcanized onto the insert (5a, 6a).

3. The device according to claim 1 or 2, **characterised in that** the counterfaces (5, 6) are hardened.

4. The device according to any one of the claims 1 to 3, **characterised in that** at least one of the counterfaces (5, 6) has a Rockwell hardness of 45 to 80 HRC.

5. The device according to any one of the claims 1 to 4, **characterised in that** an inner support (7), against which the second counterface (6) abuts, is disposed between the freewheel member (3) and the elastomeric spring body (4).

6. The device according to any one of the claims 1 to 5, **characterised in that** the first counterface (5) abuts against an appendage (8) of the pulley (1) that extends in the axial direction.

7. The device according to any one of the claims 1 to 6, **characterised in that** a sliding bearing (9) or a rolling bearing is disposed between the pulley (1) and the drive shaft (2), wherein the sliding bearing (9) or rolling bearing is disposed between a contact surface (11) facing away from the toothed surface (10) of the pulley (1) and an outer circumferential surface (12) of the drive shaft (2).

8. The device according to any one of the claims 1 to 7, **characterised in that** an inertia ring (13) is disposed on the drive shaft (2), wherein an elastomer (14) is disposed between the inertia ring (13) and the drive shaft (2).

9. The device according to claim 8, **characterised in that** the elastomeric spring body (4) is manufactured from a softer material than the elastomer (14) linking the inertia ring (13) to the drive shaft (2).

10. The device according to claim 8 or 9, **characterised in that** the inertia ring (13) is disposed axially adjacent to the pulley (1) or radially within the pulley (1).

11. The device according to any one of the claims 1 to 10, **characterised in that** the freewheel member (3) is configured as a clamping body freewheel unit.

12. The device according to any one of the claims 1 to 10, **characterised in that** the freewheel member (3) is configured as a clamping roller freewheel unit.

## Revendications

1. Dispositif pour le découplage vis-à-vis d'oscillations, incluant une poulie à courroie (1) pour la réception d'une courroie, un arbre d'entraînement (2) qui met en rotation la poulie à courroie (1), et un système d'accouplement, qui relie la poulie à courroie (1) avec l'arbre d'entraînement (2), dans lequel le système d'accouplement comprend un élément à roue libre (3) et un corps-ressort (4) en élastomère qui sont installés en série, dans lequel des surfaces de roulement antagonistes (5, 6) sont associées à l'élément à roue libre (3), de sorte qu'une première surface de roulement antagoniste (5) est tournée vers la poulie à courroie (1) et qu'une seconde surface de roulement antagoniste (6) est tournée vers le corps-ressort en élastomère (4), **caractérisé en ce qu'**au moins une surface de roulement antagoniste (5, 6) est réalisée sur une pièce d'insert (5a, 6a), et au moins une pièce d'insert (5a, 6a) porte une bague d'étanchéité radiale pour arbre (15) ou fait partie d'une bague d'étanchéité radiale pour arbre (15).

2. Dispositif selon la revendication 1, **caractérisé en ce que** la bague d'étanchéité radiale pour arbre (15) est vulcanisée sur la pièce d'insert (5a, 6a).

3. Dispositif selon la revendication 1 ou 2, **caractérisé en ce que** les surfaces de roulement antagonistes (5, 6) sont durcies.

4. Dispositif selon l'une des revendications 1 à 3, **caractérisé en ce que** l'une au moins des surfaces de roulement antagonistes (5, 6) présente une dureté Rockwell de 45 à 80 HRC.

5. Dispositif selon l'une des revendications 1 à 4, **caractérisé en ce qu'**un support intérieur (7) est agencé entre l'élément à roue libre (3) et le corps-ressort en élastomère (4), support contre lequel est appliquée la seconde surface de roulement antagoniste (6).

6. Dispositif selon l'une des revendications 1 à 5, **caractérisé en ce que** la première surface de roulement antagoniste (5) est appliquée contre un prolongement (8), s'étendant en direction axiale, de la poulie à courroie (1).

7. Dispositif selon l'une des revendications 1 à 6, **caractérisé en ce qu'**un palier lisse (9) ou un palier à roulements est agencé entre la poulie à courroie (1) et l'arbre d'entraînement (2), dans lequel le palier lisse (9) ou le palier à roulements est agencé entre une surface d'appui (11) détournée de la surface dentée (10) de la poulie à courroie (1) et une surface périphérique extérieure (12) de l'arbre d'entraînement (2).

8. Dispositif selon l'une des revendications 1 à 7, **caractérisé en ce qu'**un anneau d'inertie (13) est agencé sur l'arbre d'entraînement (2), et un élastomère (14) est agencé entre l'anneau d'inertie (13) et l'arbre d'entraînement (2).

9. Dispositif selon la revendication 8, **caractérisé en ce que** le corps-ressort en élastomère (4) est réalisé en un matériau plus tendre que l'élastomère (14) qui réunit l'anneau d'inertie (13) à l'arbre d'entraînement (2).

10. Dispositif selon la revendication 8 ou 9, **caractérisé en ce que** l'anneau d'inertie (13) est agencé axialement au voisinage de la poulie à courroie (1) ou radialement à l'intérieur de la poulie à courroie (1).

11. Dispositif selon l'une des revendications 1 à 10, **caractérisé en ce que** l'élément à roue libre (3) est réalisé sous la forme d'une roue libre à corps de coincement.

12. Dispositif selon l'une des revendications 1 à 10, **caractérisé en ce que** l'élément à roue libre (3) est réalisé sous forme d'une roue libre à galets de coincement.
